# EUROPÄISCHE PATENTSCHRIFT

(11) **EP 2 031 017 B1**
(45) Veröffentlichungstag und Bekanntmachung des Hinweises auf die Patenterteilung: **27.07.2011**
(21) Anmeldenummer: 07017078.2
(22) Anmeldetag: 31.08.2007
(51) Int. Cl.: C08K 5/5419, C08K 5/5425

(54) **Härter für Siliconkautschukmassen**
Hardener for silicone rubber mass
Durcisseur pour masses en caoutchouc silicone

(43) Veröffentlichungstag der Anmeldung: 04.03.2009
(73) Patentinhaber: Nitrochemie Aschau GmbH, 84544 Aschau am Inn (DE)
(72) Erfinder: Ederer, Theodor, Dr., 84539 Zangberg (DE); Knott, Thomas, Dr., 84453 Mühldorf a. Inn (DE); Pichl, Ulrich, 84544 Aschau a.Inn (DE); Schmidt, Gerhard, Dr., 84453 Mühldorf a. Inn (DE); Waldmann, Ludwig, Dr., 84453 Mühldorf a. Inn (DE)
(74) Vertreter: Lieck, Hans-Peter

(56) Entgegenhaltungen:
- EP-A- 0 240 333
- US-A- 4 797 462
- DATABASE CA [Online] CHEMICAL ABSTRACTS SERVICE, COLUMBUS, OHIO, US; "Room temperature-curable siloxane composition" XP002458320 gefunden im STN Database accession no. 1983:596412 -& JP 58 052351 A (TOSHIBA SILICONE CO., LTD., JAPAN) 28. März 1983 (1983-03-28)
- DATABASE CA [Online] CHEMICAL ABSTRACTS SERVICE, COLUMBUS, OHIO, US; OHARA, ISAO ET AL: "Receptor sheet compositions for no-carbon duplicating paper" XP002458321 gefunden im STN Database accession no. 1974:139581 -& JP 49 009312 A (OJI PAPER CO., LTD.) 26. Januar 1974 (1974-01-26)

## Beschreibung

Kalthärtende Siliconkautschukmassen, auch RTV-(Raumtemperaturvernetzende)-Siliconkautschukmassen genannt, sind schon lange als maßgeschneiderte Werkstoffe mit elastischen Eigenschaften bekannt. Sie werden allgemein als Dichtungsmassen oder Klebstoffe für Glas, Porzellan, Keramik, Stein, Kunststoffe, Metalle, Holz usw. eingesetzt, z.B. als Fugen- oder Dichtungsmassen im Bauwesen und im Sanitärbereich, oder als Beschichtungsmaterialien, z.B. in der Elektronikindustrie, (Römpp Chemie Lexikon, CD ROM, Version 2.0, Hrsg. J.Falbe, Thieme-Verlag, Stuttgart 1999 sowie Ullmanns Enzyklopädie der Technischen Chemie, 4. Auflage, Hrsg. E. Bartholome, Verlag Chemie, Weinheim 1982, Band 21, S. 511 ff.). Insbesondere werden Einkomponenten-RTV-Siliconkautschukmassen (RTV-1) eingesetzt; dabei handelt es sich beispielsweise um plastisch formbare Mischungen aus α,ω-Dihydroxypolyorganosiloxanen und geeigneten Härtern bzw. Vernetzungsmitteln, die unter Feuchtigkeitsausschluß aufbewahrt werden können, aber unter dem Einfluß von Wasser oder Luftfeuchtigkeit bei Raumtemperatur polymerisieren.

Vorzugsweise werden in Abhängigkeit von der gewünschten Polymerisationsgeschwindigkeit und den gewünschten chemischen und physikalischen Eigenschaften des Polymerisationsproduktes, wie z.B. dem gewünschten Vernetzungsgrad, der Lösemittelresistenz usw., verschiedene polyfunktionelle, z.B. tri- und/oder tetrafunktionelle, Härter zusammen mit verschiedenen difunktionellen oder mehrere funktionelle Gruppen tragenden Polyorganosiloxane verwendet. Dabei werden besonders häufig α,ω-Dihydroxypolyorganosiloxane als difunktionelle Polyorganosiloxane eingesetzt. Die Polymerisation erfolgt in der Regel durch die Kondensation von SiOH-Gruppen, die intermediär durch die Hydrolyse von geeigneten hydrolysierbaren SiX-Gruppen der Härter gebildet werden. Anhand der bei der Hydrolyse freigesetzten Austrittsgruppen (HX) wird bei RTV-1-Siliconkautschukmassen unterschieden zwischen sauren (HX = Säuren, wie z.B. Essigsäure), basischen (z.B. HX = Amine) und neutralen (z.B. HX = Alkohol oder Oxim) Systemen. Da sowohl saure als auch basische RTV-1-Kautschukmassen bei der Vernetzung aggressive Verbindungen freisetzen, die z.B. Metalle, Stein oder Mörtel korrodieren oder zersetzen können, werden für moderne RTV-1-Siliconkautschukmassen häufig neutralvernetzende Systeme verwendet. So werden beispielsweise neutralvernetzende Alkoxysilan-Härter verwendet, die auf den Abgangsgruppen Methanol und Ethanol basieren. Allerdings weisen die auf dem Markt erhältlichen Alkoxysysteme Probleme bei der Lagerstabilität sowie bezüglich der Haftung der polymerisierten Kautschukmassen auf. Daher werden verstärkt Oximosilan-Härter verwendet, die unter Abgabe eines Alkanonoxims hydrolysieren. Besonders Härter, die unter Abgabe von Butan-2-onoxim (bzw. Methyl-Ethyl-Ketoxim, MEKO) hydrolysieren, werden zur Zeit vielfach verwendet.

Nach neueren Erkenntnissen kann Butan-2-onoxim jedoch Krebs erzeugen, so dass eine weitere Verwendung von Butan-2-onoximabgebenden Verbindungen vom gesundheitlichen Standpunkt her grundsätzlich abzulehnen ist. Aus diesem Grunde muss Butan-2-onoxim seit 2004 mit dem R-Satz R40 ("Verdacht auf krebserzeugende Wirkung") gekennzeichnet werden. Entsprechend unterliegen auch Siliconkautschukmassen, die freies Butan-2-onoxim in einer bestimmte Grenzwerte überschreitenden Konzentration enthalten, dieser Kennzeichnungspflicht; diese Kennzeichnungspflicht umfasst besonders Siliconkautschukmassen, wie z.B. solche in Dichtstoffkartuschen, solange der Gehalt an freiem Butan-2-onoxim nicht kleiner als 1% ist (vgl. "Mischungsregel" der Zubereitungs-Richtlinie, s. Richtlinie 2006/8/EG der Kommission vom 23.01.2006, Amtsblatt der Europäischen Union vom 24.01.2006).

Praktisch alle der oben genannten üblichen Härter haben den weiteren, auch gesundheitlichen Nachteil, daß die bei der Vernetzung freigesetzten Verbindungen übel, teilweise sehr übel riechen, was insbesondere bei der Verarbeitung in geschlossenen Räumen eine große Belästigung bedeutet.

Für das Konfektionieren der Siliconkautschukmasse ist es wichtig, daß der Härter bei Raumtemperatur und am besten auch bei noch deutlich tieferen Temperaturen flüssig ist, damit sich der Härter einfach und zuverlässig handhaben und homogen mit der eigentlichen Siliconkautschukmasse bzw. deren Ausgangsstoffen vermischen läßt. Bleibt der Härter auch nach einem Transport im Winter bei Minustemperaturen flüssig, erspart das beim Konfektionieren ein zeit- und energieaufwendiges Aufschmelzen.

Weiterhin sollte der Härter zu einer möglichst vollständigen Polymerisation der Kautschukmasse führen, um das nachträgliche "Ausbluten" von unvollständig abreagierten Ausgangsstoffen etc. zu verhindern. Schließlich sollte das Polymerisationsprodukt nach abgeschlossener Härtung der Siliconkautschukmasse transparent bzw. klar sein.

Es ist deshalb eine Aufgabe der Erfindung, einen verbesserten Härter für Siliconkautschukmassen bereitzustellen, bei dem die dem Stand der Technik eigenen Nachteile beseitigt oder jedenfalls reduziert sind.

Die Aufgabe der Erfindung wird durch den Gegenstand der unabhängigen Ansprüche gelöst. Bevorzugte Ausführungsformen sind Gegenstand der abhängigen Ansprüche.

Gegenstand der Erfindung ist somit ein verbesserter Härter für Siliconkautschukmassen, die Verwendung des erfindungsgemäßen Härters zum Härten von Siliconkautschukmassen, eine den Härter umfassende Zusammensetzung, die Verwendung derselben, sowie ein Verfahren zur Herstellung des Härters.

Insbesondere ist der Gegenstand der Erfindung ein Härter für Siliconkautschukmassen, umfassend mindestens eine Verbindung mit der allgemeinen Formel Si(R¹)₃R² (I), wobei die Reste R¹ [2-(1-Methylethoxy)ethoxy]-Reste mit der Formel -OC₂H₅OCH(CH₃)₂ sind, und wobei der Rest R² ausgewählt wird aus der Gruppe, bestehend aus einem optional substituierten, geradkettigen oder verzweigten Alkylrest mit mindestens einem Kohlenstoffatom, einem optional substituierten, geradkettigen oder verzweigten Alkenylrest mit mindestens zwei Kohlenstoffatomen, einem optional substituierten, geradkettigen oder verzweigten Alkinylrest mit mindestens zwei Kohlenstoffatomen, einem optional substituierten Cycloalkylrest mit mindestens drei Kohlenstoffatomen und einem optional substituierten Arylrest mit mindestens fünf Kohlenstoffatomen.

In der allgemeinen Formel (I) bedeutet der zur Beschreibung des Restes R¹ verwendete Begriff "[2-(1-Methylethoxy)ethoxy]-Rest" einen Substituenten der Silanverbindung (I), der durch Kondensieren einer entsprechenden Silanolverbindung mit einem Molekül 2-(1-Methylethoxy)ethanol (2-Isopropyloxy-ethanol bzw. Ethylenglycol-monoisopropylether bzw. Isopropylglycol) erhalten wird, wobei eine Si-O-Bindung zwischen dem zentralen Siliciumatom der Silanverbindung und dem Sauerstoffatom der freien Hydroxyfunktion des 2-(1-Methylethoxy)ethanols ausgebildet wird.

Allgemein zeichnet sich 2-(1-Methylethoxy)ethanol (2-Isopropyloxy-ethanol bzw. Ethylenglycol-monoisopropylether) durch bevorzugte Eigenschaften aus, wie z.B. Geruch, Stabilität, Verträglichkeit etc.

Der erfindungsgemäße Härter ist ein neutralvernetzender Härter für Siliconkautschukmassen, der im Gegensatz zu üblichen Härtern viele Vorteile aufweist und als Ersatz für die üblichen Härter verwendet werden kann. Ein Vorteil der Verbindung mit der allgemeinen Formel (I) ist es, dass sie bei der Hydrolyse nur 2-(1-Methylethoxy)ethanol (2-Isopropyloxy-ethanol bzw. Ethylenglycol-monoisopropylether) abgibt.

Außerdem wird der Geruch sowohl des erfindungsgemäßen Härters selbst, als auch der ihn umfassenden Siliconkautschukmassen von den meisten Menschen als angenehm empfunden, was von den eher übelriechenden Oxim-Härtern nicht gesagt werden kann. Der angenehme Geruch des erfindungsgemäßen Härters überträgt sich auch auf damit gefertigte Dichtstoffe.

Darüber hinaus wurde überraschend gefunden, dass Verbindungen der allgemeinen Formel (I), die [2-(1-Methylethoxy)ethoxy]-Reste umfassen, einem erfindungsgemäßen Härter besonders vorteilhafte Eigenschaften verleihen, insbesondere bezüglich Schmelzpunkt des Härters, der Lagerstabilität und Polymerisationsgeschwindigkeit einer diesen umfassenden Siliconkautschukmasse, sowie der Eigenschaften des daraus entstehenden Polymerisationsproduktes, wie beispielsweise Hafteigenschaften oder Klarheit bzw. Farblosigkeit. Dies ist besonders im Hinblick auf die schlechten Eigenschaften der neutralvernetzenden Alkoxyhärter überraschend, da in beiden Fällen Hydroxygruppen Bestandteile der durch die Hydrolyse gespaltenen Bindungen sind. Insbesondere bezüglich der Lagerstabilität und der Hafteigenschaften der Siliconkautschukmassen, welche die entsprechenden Härter umfassen, ist der erfindungegemäße Härter den üblichen Alkoxyhärtern deutlich überlegen.

In der allgemeinen Formel (I) bezeichnet der Begriff "Alkylrest" einen Molekülrest auf Basis einer gesättigten aliphatischen Kohlenwasserstoffverbindung. Der Begriff "Alkylrest mit mindestens einem Kohlenstoffatom" umfasst bevorzugt eine Kohlenwasserstoffverbindung mit 1 bis 8 Kohlenstoffatomen, weiter bevorzugt 1 bis 6 Kohlenstoffatomen, und besonders bevorzugt 1 bis 4 Kohlenstoffatomen. Der Begriff "Alkylrest" umfasst sowohl geradkettige, als auch verzweigte Kohlenwasserstoffketten. Sofern durch Verzweigungen und/oder Substitutionen der Kohlenwasserstoffkette Stereoisomere möglich sind, umfasst der Begriff "Alkylrest" nicht nur eine racemische Mischung, sondern auch die reinen Enantiomere und/oder Diastereomere, sowie Mischungen davon. Der "Alkylrest" ist bevorzugt über eine Si-C-Bindung mit der Verbindung mit der allgemeinen Formel (1) verbunden. Insbesondere umfasst der Begriff "Alkylrest mit mindestens einem Kohlenstoffatom" einen Rest, der aus einem Methyl-, Ethyl-, Propyl-, Isopropyl-, Butyl-, Isobutyl-, sec-Butyl- und tert-Butylrest ausgewählt wird.

Entsprechend umfassen die Begriffe "Alkenylrest" und "Alkinylrest" im Sinne dieser Erfindung jeweils einen Molekülrest auf Basis einer teilweise ungesättigten aliphatischen Kohlenwasserstoffverbindung, die im Falle des Alkenylrestes mindestens eine C-C-Doppelbindung und im Falle des Alkinylrestes mindestens eine C-C-Dreifachbindung umfasst.

Bevorzugt umfasst ein Alkenylrest eine, zwei oder drei C-C-Doppelbindungen, besonders bevorzugt eine C-C-Doppelbindung, und ein Alkinylrest umfasst besonders bevorzugt eine, zwei oder drei C-C-Dreifachbindungen, besonders bevorzugt eine C-C-Dreifachbindung. Ein "Alkenylrest mit mindestens zwei Kohlenstoffatomen" bzw. ein "Alkinylrest mit mindestens zwei Kohlenstoffatomen" umfasst bevorzugt jeweils 2 bis 8 Kohlenstoffatome, weiter bevorzugt 2 bis 6 Kohlenstoffatome, und besonders bevorzugt 2 bis 4 Kohlenstoffatome. Der Begriff "Alkenylrest" bzw. "Alkinylrest" umfasst sowohl geradkettige, als auch verzweigte Kohlenwasserstoffketten. Sofern durch Verzweigungen und/oder Substitutionen der Kohlenwasserstoffkette Stereoisomere möglich sind, umfasst der Begriff "Alkenylrest" bzw. "Alkinylrest" nicht nur eine racemische Mischung, sondern auch die reinen Enantiomere und/oder Diastereomere, sowie Mischungen davon. Der "Alkenylrest" bzw. "Alkinylrest" ist bevorzugt über eine Si-C-Bindung mit der Verbindung mit der allgemeinen Formel (I) verbunden. Insbesondere umfasst der Begriff "Alkenylrest mit mindestens zwei Kohlenstoffatomen" einen Rest, der aus einem Allyl- und einem Vinylrest ausgewählt wird.

Der Begriff "Cycloalkylrest" bezeichnet einen Molekülrest auf Basis einer cyclischen, gesättigten oder teilweise ungesättigten aliphatischen Kohlenwasserstoffverbindung. Ein "Cycloalkylrest mit mindestens drei Kohlenstoffatomen" umfasst bevorzugt 3 bis 8 Kohlenstoffatome, weiter bevorzugt 3 bis 6 Kohlenstoffatome, noch weiter bevorzugt 4 bis 6 Kohlenstoffatome, und besonders bevorzugt 5 oder 6 Kohlenstoffatome. Der Begriff "Cycloalkylrest" umfasst auch Kohlenwasserstoffringe, die mit geradkettigen und/oder verzweigten Kohlenwasserstoffketten substituiert sind. Sofern durch Verzweigungen und/oder Substitutionen des Kohlenwasserstoffringes Stereoisomere möglich sind, umfasst der Begriff "Cycloalkylrest" nicht nur eine racemische Mischung, sondern auch die reinen Enantiomere und/oder Diastereomere, sowie Mischungen davon. Der "Cycloalkylrest" ist bevorzugt über eine Si-C-Bindung mit der Verbindung mit der allgemeinen Formel (I) verbunden. Insbesondere umfasst der Begriff "Cycloalkylrest mit mindestens drei Kohlenstoffatomen" einen Rest, der aus einem Cyclopropyl-, Cyclobutyl-, Cyclopentyl- und Cyclohexylrest ausgewählt wird.

In der allgemeinen Formel (I) bezeichnet der Begriff "Arylrest" einen Molekülrest auf Basis einer aromatischen Kohlenwasserstoffverbindung. Ein "Arylrest mit mindestens fünf Kohlenstoffatomen" umfasst bevorzugt eine aromatische Kohlenwasserstoffverbindung mit 5 bis 12 Kohlenstoffatomen, weiter bevorzugt 6 bis 12 Kohlenstoffatomen, und besonders bevorzugt 6 bis 10 Kohlenstoffatomen. Der Begriff "Arylrest" umfasst aromatische Ringsysteme mit einem, zwei, drei oder mehr Ringen, die sowohl über C-C-Einfachbindungen, als auch über gemeinsame Kanten miteinander verbunden sein können. Der "Arylrest" ist bevorzugt über eine Si-C-Bindung mit der Verbindung mit der allgemeinen Formel (I) verbunden. Insbesondere umfasst der Begriff "Arylrest" einen Rest, der aus einem Cyclopentadienyl-, Phenyl-, Naphthyl- und Diphenylrest ausgewählt wird.

Bevorzugt wird der Rest R² aus der Gruppe ausgewählt, die aus einem Methyl-, Ethyl-, Propyl-, Isopropyl-, Butyl-, Isobutyl-, sec-Butyl-, tert-Butyl-, Vinyl-, Allyl-, Cyclopentyl-, Cyclohexyl-, Phenyl-, und Diphenylrest besteht. Erfindungsgemäße Härter mit einem dieser Reste R² zeichnen sich durch besonders vorteilhafte Eigenschaften aus.

Erfindungsgemäß umfasst der Härter mindestens eine Verbindung mit der allgemeinen Formel (I). Bevorzugt umfasst der erfindungsgemäße Härter 1 bis 5 Verbindungen der allgemeinen Formel (I), weiter bevorzugt 1 bis 3 Verbindungen der allgemeinen Formel (I), noch weiter bevorzugt 1, 2 oder 3 Verbindungen der allgemeinen Formel (I), und besonders bevorzugt 2 Verbindungen der allgemeinen Formel (I). Durch einen erfindungsgemäßen Härter, der zwei, drei oder mehr Verbindungen der allgemeinen Formel (I) umfasst, können vorteilhaft sowohl die Polymerisationsgeschwindigkeit einer Siliconkautschukmasse, die einen erfindungsgemäßen Härter umfasst, als auch die Eigenschaften des entstehenden Polymerisationsproduktes eingestellt werden. Falls gewünscht, kann der erfindungsgemäße Härter auch 3, 4, 5 oder mehr Verbindungen der allgemeinen Formel (I) umfassen, um so Eigenschaften, wie z.B. die Polymerisationsgeschwindigkeit einer Siliconkautschukmasse, die einen erfindungsgemäßen Härter umfasst, oder die Eigenschaften des entstehenden Polymerisationsproduktes gemäß der Anforderungen der jeweiligen beabsichtigten Anwendung massgeschneidert einzustellen.

Der erfindungsgemäße Härter oder Vernetzer für Silikonkautschukmassen ist in der Lage, in Gegenwart von Wasser oder Luftfeuchtigkeit mit di- oder mehr-funktionellen Polyorganosiloxanverbindungen unter Ausbildung von Si-O-Si-Bindungen zu polymerisieren bzw. zu (poly)-kondensieren. Bevorzugt werden dabei α,ω-Dihydroxypolyorganosiloxane als difunktionelle Polyorganosiloxanverbindungen verwendet. Somit bedeutet im vorliegenden Zusammenhang eine Siliconkautschukmasse bevorzugt eine Zusammensetzung, die den Härter und di- oder mehr-funktionelle Polyorganosiloxanverbindungen umfaßt.

Überraschend wurde gefunden, daß der erfindungsgemäße Härter eine verbesserte Wirkung beim Härten von Siliconkautschukmassen in Gegenwart von Wasser oder Luftfeuchtigkeit bei Raumtemperatur hat. Insbesondere hat er den Vorteil, daß er bei Hydrolyse nur 2-(1-Methylethoxy)ethanol-Moleküle (2-Isopropyloxy-ethanol bzw. Ethylenglycol-monoisopropylether) abgibt. Auch ist 2-(1-Methylethoxy)ethanol (2-Isopropyloxy-ethanol bzw. Ethylenglycolmonoisopropylether) weder korrosiv, noch überhaupt aggressiv gegenüber Werkstoffen wie Metallen, Mörtel oder Stein (Mamor usw.). 2-(1-Methylethoxy)ethanol (2-Isopropyloxy-ethanol bzw. Ethylenglycol-monoisopropylether) hat außerdem einen angenehmen Geruch, gerade im Vergleich zu allen gebräuchlichen Oximen, insbesondere Butanonoxim.

Der neue Härter ist bis -20°C flüssig und deshalb bequem zu verarbeiten.

Die Polymerisationsprodukte, die unter Verwendung des erfindungsgemäßen Härters hergestellt werden, sind stippenfrei, transparent und klar.

Bevorzugt ist der Rest R² der Verbindung mit der allgemeinen Formel (I) ein Alkyl- oder Alkenylrest gemäß der oben stehenden Definition. Bevorzugt wird dabei der Alkylrest ausgewählt aus einem Methyl-, Ethyl-, Propyl-, Isopropyl-, Butyl-, Isobutyl-, sec-Butyl- und tert-Butylrest, besonders bevorzugt aus einem Methyl-, Ethyl- und Isopropylrest, und am meisten bevorzugt ist der Alkylrest ein Methylrest oder ein Ethylrest. Es wurde überraschend gefunden, dass Verbindungen der allgemeinen Formel (I), die einen so definierten Alkylrest umfassen, einem erfindungsgemäßen Härter besonders vorteilhafte Eigenschaften verleihen, insbesondere bezüglich Schmelzpunkt des Härters, der Polymerisationsgeschwindigkeit einer diesen umfassenden Siliconkautschukmasse, sowie der Eigenschaften des daraus entstehenden Polymerisationsproduktes, wie beispielsweise dessen Klarheit bzw. Farblosigkeit.

Bevorzugt ist der Alkenylrest ein Allylrest oder ein Vinylrest, besonders bevorzugt ein Vinylrest. Eine derartige Alkylengruppe kann unter geeigneten Bedingungen eine zusätzliche Vernetzung mit einem ebenfalls derartige Alkylengruppen enthaltenden Siliconkautschukmonomer bzw. -polymer ausbilden, was zu Polymerisationsprodukten mit besonders vorteilhaften Eigenschaften führen kann. Außerdem wurde überraschend gefunden, dass Verbindungen der allgemeinen Formel (I), die eine so definierte Alkenylgruppe umfassen, einem erfindungsgemäßen Härter besonders vorteilhafte Eigenschaften verleihen, insbesondere bezüglich dem Schmelzpunkt des Härters, der Polymerisationsgeschwindigkeit einer diesen umfassenden Siliconkautschukmasse, sowie der Eigenschaften des daraus entstehenden Polymerisationsproduktes, wie beispielsweise dessen Klarheit bzw. Farblosigkeit.

In einer besonders bevorzugten Ausführungsform umfasst der erfindungsgemäße Härter mindestens eine Verbindung mit der allgemeinen Formel (I), die aus der Gruppe, die aus Methyl-tris[2-(1-Methylethoxy)ethoxy]silan (Formel 1), Ethyl-tris[2-(1-Methylethoxy)ethoxy]silan (Formel 2) und Vinyl-tris[2-(1-Methylethoxy)ethoxy]silan (Formel 3) besteht, ausgewählt wird.

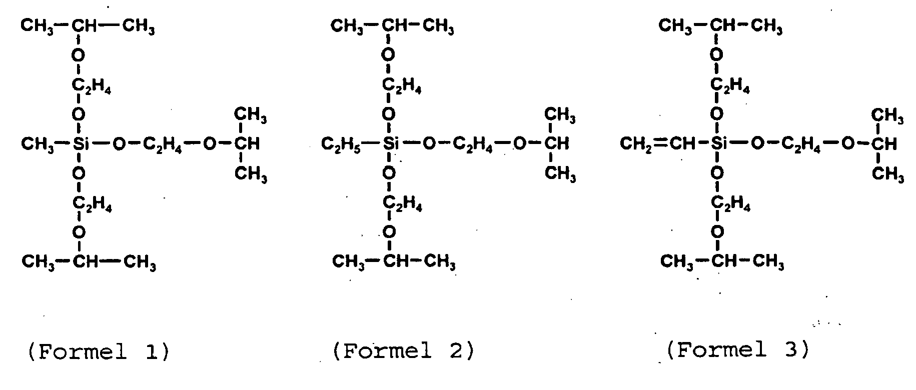

In einer besonders bevorzugten Ausführungsform umfasst der erfindungsgemäße Härter eine, zwei oder drei Verbindungen mit der allgemeinen Formel (II), die aus den Verbindungen mit den Formeln (1), (2) und (3) ausgewählt werden. Insbesondere bevorzugt ist ein Härter, der Methyl-tris[2-(1-Methylethoxy)ethoxy]silan (Formel 1) und Vinyl-tris[2-(1-Methylethoxy)ethoxy]silan (Formel 3) als zwei Verbindungen mit der allgemeinen Formel (I) umfasst.

In einer bevorzugten Weiterbildung umfasst der erfindungsgemäße Härter zusätzlich die Verbindung Tetra[2-(1-Methylethoxy)-ethoxy]-silan (Tetrakis-[2-(1-methylethoxy)ethyl]-kieselsäureester, Formel 4).

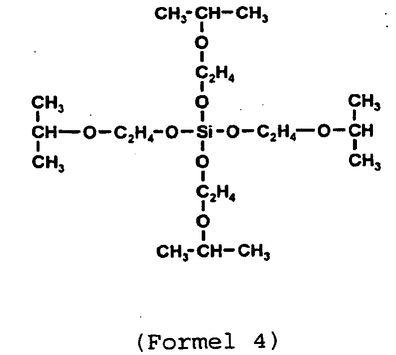

Durch einen erfindungsgemäßen Härter, der zusätzlich eine Verbindung mit der Formel (4) umfasst, können vorteilhaft sowohl die Polymerisationsgeschwindigkeit einer Siliconkautschukmasse, die einen erfindungsgemäßen Härter umfasst, als auch die Eigenschaften des entstehenden Polymerisationsproduktes eingestellt werden. Falls gewünscht, kann der erfindungsgemäße Härter Mischungen aus 2, 3, 4, 5 oder mehr Verbindungen der allgemeinen Formeln (I) umfassen, sowie zusätzlich die Verbindung mit der Formel (4) umfassen, um so Eigenschaften, wie z.B. die Polymerisationsgeschwindigkeit einer Siliconkautschukmässe, die einen erfindungsgemäßen Härter umfasst, oder die Eigenschaften des entstehenden Polymerisationsproduktes gemäß der Anforderungen der jeweiligen beabsichtigten Anwendung massgeschneidert einzustellen. Überraschend wurde gefunden, daß der erfindungsgemäße Härter eine verbesserte Wirkung beim Härten von Siliconkautschukmassen in Gegenwart von Wasser oder Luftfeuchtigkeit bei Raumtemperatur hat. Insbesondere hat auch er den Vorteil, daß bei Hydrolyse nur 2-(1-Methylethoxy)ethanol-Moleküle (2-Isopropyloxy-ethanol bzw. Ethylenglycol-monoisopropylether) abgegeben werden.

Der neue Härter ist bis -20°C flüssig und deshalb bequem zu verarbeiten.

Die Polymerisationsprodukte, die unter Verwendung des erfindungsgemäßen Härters hergestellt werden, sind überraschenderweise stippenfrei, transparent und klar.

Durch einen erfindungsgemäßen Härter, der neben mindestens einer Verbindung mit der allgemeinen Formel (I) zusätzlich die Verbindung mit der Formel (4) umfasst, können vorteilhaft sowohl die Polymerisationsgeschwindigkeit einer Siliconkautschukmasse, die einen erfindungsgemäßen Härter umfasst, als auch die Eigenschaften des entstehenden Polymerisationsproduktes eingestellt werden. Falls gewünscht, kann der erfindungsgemäße Härter, neben der Verbindung mit der Formel (4), zwei, drei oder mehr Verbindungen der allgemeinen Formel (I) umfassen, um so Eigenschaften, wie z.B. die Polymerisationsgeschwindigkeit einer Siliconkautschukmasse, die einen erfindungsgemäßen Härter umfasst, oder die Eigenschaften des entstehenden Polymerisationsproduktes gemäß der Anforderungen der jeweiligen beabsichtigten Anwendung massgeschneidert einzustellen. Besonders bevorzugt umfasst der erfindungsgemäße Härter zwei Verbindungen mit der Formel (I) und die Verbindung mit der Formel (4).

Überraschend wurde gefunden, daß der erfindungsgemäße Härter, der zusätzlich die Verbindung mit der Formel (4) umfasst, eine weiter verbesserte Wirkung beim Härten von Siliconkautschukmassen in Gegenwart von Wasser oder Luftfeuchtigkeit bei Raumtemperatur hat. Insbesondere hat auch er den Vorteil, daß bei Hydrolyse nur 2-(1-Methylethoxy)ethanol-Moleküle (2-Isopropyloxy-ethanol bzw. Ethylenglycolmonoisopropylether) abgegeben werden.

Der neue Härter ist bis -20°C flüssig und deshalb bequem zu verarbeiten.

Die Polymerisationsprodukte, die unter Verwendung des erfindungsgemäßen Härters hergestellt werden, sind überraschenderweise stippenfrei, transparent und klar.

In einer besonders bevorzugten Ausführungsform umfasst der erfindungsgemäße Härter mindestens eine der Verbindungen mit der Formel (1), (2) oder (3), sowie zusätzlich die Verbindung mit der Formel (4). Besonders bevorzugt umfasst der erfindungsgemäße Härter zwei Verbindungen, die aus den Verbindungen mit den Formeln (1), (2) und (3) ausgewählt werden, und die Verbindung mit der Formel (4). Insbesondere bevorzugt ist ein Härter, der Methyl-tris[2-(1-Methylethoxy)ethoxy]silan und Vinyl-tris[2-(1-Methylethoxy)ethoxy]silan als Verbindungen mit der allgemeinen Formel (I) und Tetra[2-(1-Methylethoxy)ethoxy]silan (Formel 4) umfasst.

Mit einem erfindungsgemäßen Härter, der zusätzlich auch die Verbindung mit der Formel (4) umfasst, wird eine weiter verbesserte Wirkung beim Härten von Siliconkautschukmassen in Gegenwart von Wasser oder Luftfeuchtigkeit erzielt. Er hat alle vorgenannten positiven Eigenschaften einschließlich der, daß auch bei Hydrolyse der Verbindungen mit der Formel (4) nur 2-(1-Methylethoxy)ethanol (2-Isopropyloxy-ethanol bzw. Ethylenglycolmonoisopropylether) freigesetzt wird. Da auch die Verbindung mit der allgemeinen Formel (I) bei der Hydrolyse nur 2-(1-Methylethoxy)ethanol freisetzt, setzt ein derartiger erfindungsgemäßer Härter ausschließlich 2-(1-Methylethoxy)ethanol frei. Darüber hinaus besteht auch die Möglichkeit einer Feineinstellung der Eigenschaften des Härters beim Aushärten (z.B. Hautbildungszeit, Klebefreizeit, Frühbeanspruchung etc.) durch eine entsprechende Wahl der prozentualen Anteile seiner Komponenten.

In diesem Sinne bevorzugt umfasst der Härter eine Verbindung mit der allgemeinen Formel (I) in einem Anteil von 20 bis 99 Gew.-%, weiter bevorzugt 45 bis 99 Gew.-%, noch weiter bevorzugt 50 bis 99 Gew.-% und besonders bevorzugt 55 bis 99 Gew.-%. Vorzugsweise umfasst der Härter daneben eine Verbindung mit der Formel (4) in einem Anteil von 1 bis 40 Gew.-%, weiter bevorzugt 1 bis 27 Gew.-% und besonders bevorzugt 1 bis 20 Gew.-%. Der Härter kann daneben auch weitere vernetzungsfähige Verbindungen auf Basis von Verbindungen der allgemeinen Formeln (I) umfassen. In einer besonders bevorzugten Ausführungsform umfasst der erfindungsgemäße Härter 50 Gew.-% einer Verbindung mit der allgemeinen Formel (I) und 50 Gew.-% einer anderen Verbindung mit der allgemeinen Formel (I), die von der ersten Verbindung mit der allgemeinen Formel (I) verschieden ist. Ein Beispiel dieser Ausführungsform ist ein erfindungsgemäßer Härter, der 50 Gew.-% Methyl-tris[2-(1-Methylethoxy)ethoxy]silan und 50 Gew.-% Vinyl-tris[2-(1-Methylethoxy)ethoxy]silan umfasst. In einer anderen bevorzugten Ausführungsform umfasst der erfindungsgemäße Härter zwei Verbindungen mit der allgemeinen Formel (I) im Verhältnis 3:7 bzw. 7:3. Ein Beispiel für einen erfindungsgemäßen Härter, der zusätzlich die Verbindung mit der Formel (4) umfasst, ist ein Härter, der 40-45 Gew.-% Methyl-tris[2-(1-Methylethoxy)ethoxy]silan und 40-45 Gew.-% Vinyl-tris[2-(1-Methylethoxy)ethoxy]silan als Verbindungen mit der allgemeinen Formel (I), und 10-20 Gew.-% Tetra[2-(1-Methylethoxy)ethoxy]silan (Formel 4) umfasst.

Erfindungsgemäß wird der erfindungsgemäße Härter zum Härten einer Siliconkautschukmasse verwendet. Dazu wird im Sinne dieser Erfindung eine Zusammensetzung hergestellt, die den erfindungsgemäßen Härter und eine geeignete Siliconkautschukmasse bzw. deren Vorstufen umfasst.

Entsprechend umfasst eine erfindungsgemäße Zusammensetzung den oben beschriebenen erfindungsgemäßen Härter und zumindest eine Organosiliconverbindung, vorzugsweise den oben beschriebenen erfindungsgemäßen Härter und zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein α,ω-dihydroxyl-terminiertes Polyorganosiloxan. Ganz besonders bevorzugt sind α,ω-dihydroxyl-terminierte Polydiorganosiloxane, insbesondere α,ω-dihydroxyl-terminierte Polydialkylsiloxane, α,ω-dihydroxyl-terminierte Polydialkenylsiloxane oder α,ω-dihydroxyl-terminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliciumatom, als auch Copolymere aus Monomeren mit verschiedenen organischen Substituenten an einem Siliciumatom umfaßt sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder α,ω-dihydroxyl-terminierte Polydiorganosiloxane mit durch Hydroxyl- und/oder Aminogruppensubstituierten organischen Substituenten an den Siliciumatomen.

Besonders bevorzugte Beispiele für eine Organosiliconverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt.

Es können auch Mischungen aus Polydiorganosiloxanen mit unterschiedlichen Viskositäten verwendet werden.

Falls gewünscht, kann die erfindungsgemäße Zusammensetzung weitere übliche Zusätze umfassen. Übliche Zusätze sind Füllstoffe, Farbmittel, Weichmacher, Thixotrophiermittel, Benetzungsmittel, Haftmittel, Katalysatoren und andere.

Als Füllstoffe können sowohl verstärkende als auch nichtverstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotrophiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt., insbesondere von 100 cSt, Paraffinöle und polysubstituierte Alkylbenzole.

Als Benetzungs- und/oder Haftmittel (Haftvermittler) werden bevorzugt an sich bekannte Silanverbindungen mit reaktive Gruppen tragenden organischen Substituenten am Siliciumatom verwendet, die sich von den erfindungsgemäß verwendeten Organosiliconverbindungen unterscheiden, wie z.B. Organosilane mit reaktiven Amin-, Carbonsäure-, Epoxy- oder Thiolgruppen. Besonders bevorzugte Beispiele umfassen Aminosilane, wie Aminoethyl-aminopropyl-trialkoxysilane. Konkrete Beispiele besonders bevorzugter Haftmittel (Haftvermittler) sind 3-Aminopropyl-triethoxysilan, 3-Aminopropyl-trimethoxysilan, Aminoethylaminopropyl-trimethoxysilan, Butylaminopropyltriethoxysilan, Butylaminopropyl-trimethoxysilan, Propylaminopropyl-triethoxysilan, Propylaminopropyltrimethoxysilan, N-Cyclohexyl-3-aminopropyl-trimethoxysilan, N-Cyclohexyl-3-aminopropyl-triethoxysilan, und Co-oligomeric diamino/alkyl functional silan, welches als Dynasylan 1146 von Degussa erhältlich ist.

Bevorzugt können metallorganische Katalysatoren verwendet werden, wie sie üblicherweise für kondensationsvernetzende Polysiloxane eingesetzt werden. Bevorzugte Katalysatoren sind zinnorganische Verbindungen, wie beispielsweise Dibutylzinndilaurat, Dibutylzinndiacetat und Zinn(II)octoat. Besonders bevorzugte Katalysatoren sind Alkyl-zinn-carboxylate, wie beispielsweise Dibutyl-zinn-dilaurat, Dibutyl-zinndivaleriat, Dibutyl-zinn-diacetat, Dibutyl-zinn-dineodecanoat, Dibutyl-zinn-diacetylacetonat, Dioctyl-zinn-bis(2-ethylhexanoat), Dibutyl-zinn-dimaleat und Butyl-zinn-tris(2-ethylhexanoat). Titan-, Zirkonium- oder Aluminium-basierte Verbindungen können ebenfalls als Katalysatoren verwendet werden.

Es wurde gefunden, daß die Zusammensetzung unter Feuchtigkeitsausschluß über Zeitspannen von mehr als 12 Monaten aufbewahrt werden kann und unter dem Einfluß von Wasser oder Luftfeuchtigkeit bei Raumtemperatur polymerisiert.

Weiterhin ist vorteilhaft, daß die erfindungsgemäße Zusammensetzung beim Härten zu einer Siliconkautschukmasse nur 2-(1-Methylethoxy)ethanol abgeben, welches weder korrosiv noch aggressiv gegenüber Werkstoffen wie Metallen, Mörtel oder Stein (Marmor usw.) ist und einen angenehmen Geruch hat. Die ausgehärtete Masse ist stippenfrei, transparent und klar. Weiterhin zeigt sie eine sehr gute Haftung auf den meisten Substraten.

Bevorzugt umfasst die erfindungsgemäße Zusammensetzung 40 bis 99 Gew.-% der Organosiliconverbindung und 1 bis 15 Gew.-% des erfindungsgemäßen Härters, wobei der Rest jeweils durch übliche Zusätze ausgemacht wird. Weiter bevorzugt umfasst die Zusammensetzung 50 bis 80 Gew.-% der Organosiliconverbindung und 1 bis 15 Gew.-% des erfindungsgemäßen Härters, und besonders bevorzugt 50 bis 70 Gew.-% der Organosiliconverbindung und 3 bis 10 Gew.-% des erfindungsgemäßen Härters, wobei der Rest jeweils durch übliche Zusätze ausgemacht wird.

Ebenfalls ist Gegenstand der Erfindung eine Verwendung der erfindungsgemäßen Zusammensetzung als Dichtungsmittel, Klebstoff oder Beschichtungsmittel. Die Zusammensetzung wird bevorzugt im Bauwesen als Dichtungsmittel oder als Klebstoff eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

Ein weiterer Gegenstand der Erfindung ist ein Verfahren zur Herstellung eines erfindungsgemäßen Härters. Insbesondere betrifft das erfindungsgemäße Verfahren die Herstellung einer Verbindung mit der allgemeinen Formel (I). Nach dem erfindungsgemäßen Verfahren wird eine Verbindung mit der allgemeinen Formel (I) hergestellt, indem eine Verbindung mit der allgemeinen Formel SiX₃R² (II) mit drei Äquivalenten 2-(1-Methylethoxy)ethanol (2-Isopropyloxy-ethanol bzw. Ethylenglycol-monoisopropylether) zur Reaktion gebracht wird. Der Rest R² in der Verbindung mit der allgemeinen Formel (III) wird aus einem Alkyl-, Alkenyl-, Alkinyl-, Cycloalkyl- oder Arylrest ausgewählt, wobei die jeweiligen Reste wie oben definiert werden. Der Rest X in der Verbindung mit der allgemeinen Formel (II) wird aus einer üblichen Austrittsgruppe ausgewählt, welche mit einer freien Hydroxyfunktion eines anderen Moleküls, wie z.B. eines Alkohols mit der allgemeinen Formel R'-OH, unter Freisetzung des Moleküls H-X reagiert, wobei eine Si-O-R'-Bindung zwischen dem Siliciumatom der Verbindung mit der allgemeinen Formel (II) und dem addierten Molekülrest ausgebildet wird. Bevorzugt ist die Austrittsgruppe X ein Alkoxyrest mit mindestens einem Kohlenstoffatom gemäß obiger Definition oder ein Halogenatom, insbesondere ein Chloratom. Die Verbindung mit der Formel (4) kann in einem analogen Herstellungsverfahren hergestellt werden, wenn beispielsweise Tetrachlorsilan mit vier Äquivalenten 2-(1-Methylethoxy)ethanol (2-Isopropyloxy-ethanol bzw. Ethylenglycol-monoisopropylether) zur Reaktion gebracht wird.

### Beispiele

### Beispiel 1:

### Synthese von Methyl-tris-[2-(1-Methylethoxy)ethoxy]-silan (1)

In einem 4000 ml-Vierhalskolben, ausgestattet mit KPG-Rührer, Tropftrichter, Rückflusskühler, Thermometer und Wasserbadkühlung, werden 440,6 g Ethylenglycolmonoisopropylether (4,23 mol), 1500,0 g Toluol und 432,6 g Triethylamin (4,27 mol) unter Stickstoffatmosphäre vorgelegt. Anschließend werden unter Wasserbadkühlung 209,0 g Methyltrichlorsilan (1,40 mol) so zugegeben, dass die Temperatur 30°C nicht übersteigt. Nach Beendigung der Zugabe wird für 3 Stunden bei Raumtemperatur gerührt und anschließend der gebildete Feststoff abfiltriert und mit Toluol gewaschen. Die vereinigten Filtrate werden in einer Destillationsapparatur vorgelegt und das Lösungsmittel Toluol wird unter Vakuum abgetrennt.
Falls notwendig, kann das Produkt auch destilliert werden. Bedingungen: Sumpftemperatur 160°C, Kopftemperatur 126°C, Vakuum 1-2 mbar

Man erhält 459,0 g Methyl-tris-[2-(1-Methylethoxy)ethoxy]-silan mit einer durch GC bestimmten Reinheit von 95%. Dies entspricht einer Ausbeute von 93% der Theorie, bezogen auf Methyltrichlorsilan.

Zur Bestimmung der Reinheit wurde ein Kapillar-Gaschromatograph (Capillary GC) mit einer Säule mit einer Länge von 25 m und einem Innendurchmesser (ID) von 0,25 mm (FD: 0,5 um) und einem FID-Detektor verwendet. Als Trägergas wurde Helium verwendet und der Split betrug 150 ml/min. Die Proben wurden ohne Probenvorbereitung in Direkteinspritzung mit einer Probenmenge von 0,3 µl zugeführt.

### Beispiel 2:

### Synthese von Ethyl-tris-[2-(1-Methylethoxy)ethoxy]-silan (2)

Ethyl-tris-[2-(1-Methylethoxy)ethoxy]-silan wird in einer zu Beispiel 1 analogen Synthese hergestellt, nur dass 228,6 g Ethyltrichlorsilan (1,40 mol) zugegeben werden.

Man erhält 478 g Ethyl-tris-[2-(1-Methylethoxy)ethoxy]-silan mit einer durch GC (s. Beispiel 1) bestimmten Reinheit von 92-97%. Dies entspricht einer Ausbeute von 93% der Theorie, bezogen auf Ethyltrichlorsilan.

### Beispiel 3:

### Synthese von Vinyl-tris-[2-(1-Methylethoxy)ethoxy]-silan (3)

In einem 4000 ml-Vierhalskolben, ausgestattet mit KPG-Rührer, Tropftrichter, Rückflusskühler, Thermometer und Wasserbadkühlung, werden 440,6 g Ethylenglycolmonoisopropylether (4,23 mol), 1500,0 g Toluol und 432,6 g Triethylamin (4,27 mol) unter Stickstoffatmosphäre vorgelegt. Anschließend werden unter Wasserbadkühlung 226,1 g Vinyltrichlorsilan (1,40 mol) so zugegeben, dass die Temperatur 30°C nicht übersteigt. Nach Beendigung der Zugabe wird für 3 Stunden bei Raumtemperatur gerührt und anschließend der gebildete Feststoff abfiltriert und mit Toluol gewaschen. Die vereinigten Filtrate werden in einer Destillationsapparatur vorgelegt und das Lösungsmittel Toluol wird unter Vakuum abgetrennt.
Falls notwendig, kann das Produkt auch destilliert werden. Bedingungen: Sumpftemperatur 160°C, Kopftemperatur 126°C, Vakuum 1-2 mbar

Man erhält 479,8 g Vinyl-tris-[2-(1-Methylethoxy)ethoxy]-silan mit einer durch GC (s. Beispiel 1) bestimmten Reinheit von 92,5%. Dies entspricht einer Ausbeute von 94% der Theorie, bezogen auf Vinyltrichlorsilan.

### Beispiel 4:

### Synthese von Tetra-[2-(1-Methylethoxy)ethoxy]-silan (4)

Tetra-[2-(1-Methylethoxy)ethoxy]-silan wird in einer zu den Beispielen 1 bis 3 analogen Synthese hergestellt, nur dass 176,7 g Tetrachlorsilan (1,04 mol) zugegeben werden.

Man erhält 439,0 g Tetra-[2-(1-Methylethoxy)ethoxy]-silan mit einer durch GC (s. Beispiel 1) bestimmten Reinheit von 92-97%. Dies entspricht einer Ausbeute von 95% der Theorie, bezogen auf Tetrachlorsilan.

### Beispiel 5:

### Dichtstoffrezeptur A

Es wird eine Siliconkautschukmischung gemäß folgender Formulierung hergestellt:

| | |
|---|---|
| 585,0 g | α,ω-dihydroxyl-terminiertes Polydimethylsiloxan mit Viskosität 80.000 cSt |
| 260,0 g | Polydimethylsiloxan mit Viskosität 100 cSt |
| 90,0 g | hochdisperse Kieselsäure (Cabosil 150) |
| 10,0 g | Haftvermittler (Aminoalkyl-trialkoxysilan) |
| 0,2 g | Katalysator (Alkyl-zinn-carboxylat) |

Als Härter A wird eine Mischung gemäß folgender Formulierung zugegeben:

| | |
|---|---|
| 20,0 g | Methyl-tris-[2-(1-Methylethoxy)ethoxy]-silan |
| 20,0 g | Vinyl-tris-[2-(1-Methylethoxy)ethoxy]-silan |

Der Dichtstoff hat nach Ausbringung an Luft:
- eine Hautbildungszeit von 15 min
- eine Klebfreizeit von 65 min
- eine Frühbeanspruchung nach 75 min
- eine vollständige Aushärtung nach 24 h
- ein transparentes Aussehen
- einen angenehmen Geruch
- eine Shore-Härte A von 20

Die Eigenschaften Hautbildungszeit, Klebfreizeit, Frühbeanspruchung, vollständige Aushärtung, Aussehen, Geruch und Shore-Härte A wurden nach üblichen Verfahren bestimmt. Alle Messungen wurden bei Bedingungen von 23°C und 50% Luftfeuchtigkeit durchgeführt.

Zur Bestimmung der Hautbildungszeit wurde die Zeit gemessen, zu der an der Oberfläche eines Probenstranges eine vollständige Schicht aus verfestigtem Material (Haut) beobachtet wurde.

Zur Bestimmung der Klebfreizeit wurde die Zeit gemessen, zu der die Oberfläche eines Probenstranges keine Klebrigkeit mehr aufweist.

Zur Bestimmung der Frühbeanspruchung wurde ein Siliconstreifen von 10 mm Höhe auf einen Blechstreifen ausgebracht. Die Belastbarkeit wird durch ein Abknicken des Streifens um 90° getestet. Angegeben wird die Zeit, bei der die Haut des Siliconstreifens nicht reißt.

Zur Bestimmung der vollständigen Aushärtung wird der Dichtstoff mit 4 mm Höhe auf eine Glasplatte aufgetragen und die Zeitdauer der Durchhärtung bis zur Glasplatte gemessen.

Aussehen und Geruch wurden durch organoleptische Prüfung bestimmt.

Die Shore-Härte A wurde mit einem Zwick-Roell-Messgerät (Bez.: ASTM D 2240; DIN 53505; ISO 868) bestimmt.

### Beispiel 6:

### Dichtstoffrezeptur B

Es wird eine Siliconkautschukmischung gemäß folgender Formulierung hergestellt:

| | |
|---|---|
| 585,0 g | α,ω-dihydroxyl-terminiertes Polydimethylsiloxan mit Viskosität 80.000 cSt |
| 260,0 g | Polydimethylsiloxan mit Viskosität 100 cSt |
| 90,0 g | hochdisperse Kieselsäure (Cabosil 150) |
| 10,0 g | Haftvermittler (Aminoalkyl-trialkoxysilan) |
| 0,2 g | Katalysator (Alkyl-zinn-carboxylat) |

Als Härter B wird eine Mischung gemäß folgender Formulierung zugegeben:

| | |
|---|---|
| 17,5 g | Methyl-tris-[2-(1-Methylethoxy)ethoxy]-silan |
| 17,5 g | Vinyl-tris-[2-(1-Methylethoxy)ethoxy]-silan |
| 5,0 g | Tetra-[2-(1-Methylethoxy)ethoxy]-silan |

Der Dichtstoff hat nach Ausbringung an Luft:
- eine Hautbildungszeit von 12 min
- eine Klebfreizeit von 60 min
- eine Frühbeanspruchung nach 60 min
- eine vollständige Aushärtung nach 24 h
- ein transparentes Aussehen
- einen angenehmen Geruch
- eine Shore-Härte A von 22

Messbedingungen wie in Beispiel 5 beschrieben.

### Vergleichsbeispiel 1:

### Dichtstoffrezeptur mit Oximhärter (2-Butanonoxim; MEKO):

Es wird eine Siliconkautschukmischung gemäß folgender Formulierung hergestellt:

| | |
|---|---|
| 585,0 g | α,ω-dihydroxyl-terminiertes Polydimethylsiloxan mit Viskosität 80.000 cSt |
| 260,0 g | Polydimethylsiloxan mit Viskosität 100 cSt |
| 90,0 g | hochdisperse Kieselsäure (Cabosil 150) |
| 10,0 | g Haftvermittler (Aminopropyl-triethoxysilan) |
| 0,2 g | Katalysator (Alkyl-zinn-carboxylat) |

Als Härter wird eine Mischung gemäß folgender Formulierung zugegeben:

| | |
|---|---|
| 13,5g | Vinyl-tris-(2-Butanonoximo)silan (VOS) |
| 32,0g | Methyl-tris-(2-Butanonoximo)silan (MOS) |

Der Dichtstoff hat nach Ausbringung an Luft:
- eine Hautbildungszeit von 13 min
- eine Klebfreizeit von 55 min
- eine Frühbeanspruchung nach 60 min
- eine vollständige Aushärtung nach 24 h
- ein transparentes Aussehen
- einen unangenehmen (oximartigen) Geruch
- eine Shore-Härte A von 23

Messbedingungen wie in Beispiel 5 beschrieben.

Die in Vergleichsbeispiel 1 hergestellte Rezeptur entspricht einer typischen Rezeptur eines Dichtstoffes auf Basis einer RTV-Siliconkautschukmasse, die bezüglich ihrer Eigenschaften durch langjährige Optimierung eingestellt wurde und gegenwärtig im Stand der Technik eingesetzt wird. Dieser Dichtstoff setzt bei der Ausbringung an Luft 2-Butanonoxim (MEKO) frei, und ist daher vom Standpunkt der Toxikologie bedenklich.

Ein Vergleich der Eigenschaften der in den erfindungsgemäßen Beispielen 5 und 6 hergestellten Dichtstoffe mit den Eigenschaften des Dichtstoffes des Vergleichsbeispiels 1 zeigt, dass mit dem erfindungsgemäßen Härter Dichtstoffe hergestellt werden können, deren Eigenschaften mindestens denen des Standes der Technik entsprechen, welche ein Ergebnis langjähriger Optimierung sind. Üblicherweise werden als Eigenschaften für Silicondichtstoffe eine Hautbildungszeit von 5 bis 15 Minuten, eine Klebfreizeit von 60 bis 120 Minuten und eine Durchhärtung von maximal 48 Stunden gewünscht. Jedoch haben die Dichtstoffe der erfindungsgemäßen Beispiele 5 und 6 den zusätzlichen Vorteil, dass sie, im Gegensatz zu dem des Vergleichsbeispiels 1, bei Ausbringung an Luft ausschließlich 2-(1-Methylethoxy)ethanol freisetzen, jedoch kein 2-Butanonoxim (MEKO). Außerdem haben sie einen angenehmen Geruch.

## Patentansprüche

1. Härter für Siliconkautschukmassen, umfassend mindestens eine Verbindung mit der allgemeinen Formel Si(R¹)₃R² (I),
wobei die Reste R¹[2-(1-Methylethoxy)ethoxy]-Reste mit der Formel -OC₂H₄OCH(CH₃)₂ sind, und wobei der Rest R² ausgewählt wird aus der Gruppe, bestehend aus einem optional substituierten, geradkettigen oder verzweigten Alkylrest mit mindestens einem Kohlenstoffatom, einem optional substituierten, geradkettigen oder verzweigten Alkenylrest mit mindestens zwei Kohlenstoffatomen, einem optional substituierten, geradkettigen oder verzweigten Alkinylrest mit mindestens zwei Kohlenstoffatomen, einem optional substituierten Cycloalkylrest mit mindestens drei Kohlenstoffatomen und einem optional substituierten Arylrest mit mindestens fünf Kohlenstoffatomen.

2. Härter nach Anspruch 1, **dadurch gekennzeichnet, dass** der Rest R² ausgewählt wird aus der Gruppe, bestehend aus einem Methyl-, einem Ethyl-, einem Propyl-, einem Isopropyl-, einem Butyl-, einem Isobutyl-, einem sec-Butyl-, einem tert-Butyl-, einem Allyl-, einem Vinyl-, einem Cyclopentyl-, einem Cyclohexyl-, einem Phenyl- und einem Diphenylrest.

3. Härter nach einem der Ansprüche 1 oder 2, **dadurch gekennzeichnet, dass** er mindestens eine Verbindung umfasst, die ausgewählt wird aus der Gruppe, bestehend aus Methyl-tris [2-(1-Methylethoxy)ethoxy] silan, Ethyl-tris[2-(1-Methylethoxy)ethoxy]silan und Vinyl-tris[2-(1-Methylethoxy)ethoxy]silan.

4. Härter nach einem der vorherigen Ansprüche, **dadurch gekennzeichnet, dass** er zusätzlich die Verbindung Tetra[2-(1-Methylethoxy)ethoxy]silan umfasst.

5. Verwendung eines Härters nach einem der Ansprüche 1 bis 4 zum Härten einer Siliconkautschukmasse.

6. Zusammensetzung, **dadurch gekennzeichnet, dass** sie den Härter nach einem der Ansprüche 1 bis 4 und eine - Organosiliconverbindung umfasst.

7. Zusammensetzung nach Anspruch 6, **dadurch gekennzeichnet, dass** die Organosiliconverbindung eine α,ω-dihydroxyl-terminierte Polyorganosiloxanverbindung ist, insbesondere ein α,ω-dihydroxyl-terminiertes Polydialkylsiloxan.

8. Zusammensetzung nach Anspruch 6 oder 7, **dadurch gekennzeichnet, daß** sie 40 bis 90 Gew.-% der Organosiliconverbindung und 1 bis 15 Gew.-% des Härters nach einem der Ansprüche 1 bis 4 umfasst.

9. Verwendung einer Zusammensetzung nach einem der Ansprüche 6, 7 oder 8 als Dichtungsmittel, Klebstoff oder Beschichtungsmittel.

10. Verfahren zur Herstellung eines Härters nach einem der Ansprüche 1 bis 4, umfassend einen Schritt, in dem eine Verbindung der allgemeinen Formel SiX₃R² (II) mit drei Äquivalenten 2-(1-Methylethoxy)ethanol zur Reaktion gebracht wird, wobei der Rest R² aus einem Alkyl-, Alkenyl-, Alkinyl-, Cycloalkyl- oder Arylrest ausgewählt wird, und wobei der Rest X ausgewählt wird aus der Gruppe, bestehend aus einem Alkoxyrest mit mindestens einem Kohlenstoffatom und einem Halogenatom, insbesondere einem Chloratom.

## Claims

1. Hardener for silicone rubber masses, comprising at least one compound with the general formula Si(R¹)₃R² (I), wherein the radicals R¹ are [2-(1-methylethoxy)ethoxy] radicals with the formula -OC₂H₄OCH(CH₃)₂, and wherein the radical R² is selected from the group consisting of an optionally substituted, straight-chain or branched alkyl radical with at least one carbon atom, an optionally substituted, straight-chain or branched alkenyl radical with at least two carbon atoms, an optionally substituted, straight-chain or branched alkinyl radical with at least two carbon atoms, an optionally substituted cycloalkyl radical with at least three carbon atoms, and an optionally substituted aryl radical with at least five carbon atoms.

2. The hardener according to claim 1, **characterized in that** the radical R² is selected from the group consisting of a methyl, an ethyl, a propyl, an isopropyl, a butyl, an isobutyl, a sec-butyl, a tert-butyl, an allyl, a vinyl, a cyclopentyl, a cyclohexyl, a phenyl, and a diphenyl radical.

3. The hardener according to any of claims 1 or 2, **characterized in that** it comprises at least one compound which is selected from the group consisting of methyl-tris[2-(1-methylethoxy)ethoxy]silane, ethyl-tris[2-(1-methylethoxy)ethoxy]-silane, and vinyl-tris(2-(1-methylethoxy)ethoxy]silane.

4. The hardener according to any of the preceding claims, **characterized in that** it additionally comprises the compound tetra[2-(1-methylethoxy)ethoxy]silane.

5. Use of a hardener according to any of claims 1 to 4 for hardening a silicone rubber mass.

6. A composition, **characterized in that** it comprises the hardener according to any of claims 1 to 4 and an organosilicone compound.

7. The composition according to claim 6, **characterized in that** the organosilicone compound is an α,ω-dihydroxyl-terminated polyorganosiloxane compound, in particular an α,ω-dihydroxyl-terminated polydialkylsiloxane.

8. The composition according to claim 6 or 7, **characterized in that** it comprises 40 to 90 wt-% of the organosilicone compound and 1 to 15 wt-% of the hardener according to any of claims 1 to 4.

9. Use of a composition according to any of claims 6, 7 or 8 as sealant, adhesive or coating agent.

10. A method for producing a hardener according to any of claims 1 to 4, comprising a step in which a compound of the general formula SiX₃R² (II) is reacted with three equivalents of 2-(1-methylethoxy)ethanol, wherein the radical R² is selected from an alkyl, alkenyl, alkinyl, cycloalkyl or aryl radical, and wherein the radical X is selected from the group consisting of an alkoxy radical with at least one carbon atom and a halogen atom, in particular a chlorine atom.

## Revendications

1. Durcisseur pour des masses du caoutchouc de silicone, comprenant au moins un composé de formule générale Si(R¹)₃R² (I), dans lequel les résidus R¹ sont les résidus [2-(1-méthyléthoxy)éthoxy) avec la formule -OC₂H₄OCH(CH₃)₂, et dans lequel le résidu R² est choisi dans le groupe constitué d'un résidu alkyle à chaîne linéaire ou ramifiée avec a moins un atome de carbone, optionnellement substitué, d'un résidu alcényle à chaîne linéaire ou ramifiée avec au moins deux atomes de carbone, optionnellement substitué, d'un résidu alkinyle à chaîne linéaire ou ramifiée avec au moins deux atomes de carbone, optionnellement substitué, d'un résidu cycloalkyle avec au moins trois atomes de carbone, optionnellement substitué, et d'un résidu aryle avec au moins cinq atomes de carbone, optionnellement substitué.

2. Durcisseur selon la revendication 1, **caractérisé en ce que** le résidu R² est choisi dans le groupe constitué d'un résidu méthyle, d'un résidu éthyle, d'un résidu propyle, d'un résidu isopropyle, d'un résidu butyle, d'un résidu isobutyle, d'un résidu sec-butyle, d'un résidu tertbutyle, d'un résidu allyle, d'un résidu vinyle, d'un résidu cyclopentyle, d'un résidu cyclohexyle, d'un résidu phényle, et d'un résidu diphényle.

3. Durcisseur selon l'une des revendications 1 ou 2, **caractérisé en ce qu'**il contient au moins un composé choisi dans le groupe constitué de méthyl-tris[2-(1-méthyléthoxy)éthoxy]-silane, de éthyl-tris[2-(1-méthyléthoxy)éthoxy]silane et de vinyl-tris[2-(1-méthyléthoxy)éthoxy]silane.

4. Durcisseur selon l'une des revendications précédentes, **caractérisé en ce qu'**il contient, en outre, le composé tetra[2-(1-méthyléthoxy)éthoxy]silane.

5. Utilisation d'un durcisseur selon l'une des revendications 1 à 4 pour durcir une masse du caoutchouc de silicone.

6. Composition, **caractérisé en ce qu'**elle contient le durcisseur selon l'une des revendications 1 à 4 et un composé de type organosilicone.

7. Composition selon la revendication 6, **caractérisé en ce que** le composé de type organosilicone est un composé de type polyorganosiloxane à terminaisons α,ω-dihydroxyles, notamment un polydialkylsiloxane à terminaisons α,ω-dihydroxyles.

8. Composition selon la revendication 6 ou 7, **caractérisé en ce qu'**elle contient de 40 à 90 % en poids du composé de type organosilicone et de 1 à 15 % en poids du durcisseur selon l'une des revendications 1 à 4.

9. Utilisation d'une composition selon l'une des revendications 6, 7 ou 8, en tant que matériaux d'étanchéité, que agent adhésif ou que agent de revêtement.

10. Procédé pour la production d'un durcisseur selon l'une des revendications 1 à 4, comprenant une étape, dans laquelle un composé de formule générale SiX₃R² (II) est mis en réaction avec trois équivalents de 2-(méthyléthoxy)-éthanol, dans lequel le résidu R² est choisi parmi un résidu alkyle, un résidu alcényle, un résidu alkinyle, un résidu cycloalkyle et un résidu aryle, et dans lequel le résidu X est choisi dans le groupe constitué d'un résidu alkoxy avec au moins un atome de carbone et d'un atome d'halogène, notamment un atome de chlore.
